# FASCICULE DE BREVET EUROPEEN

(11) **EP 0 888 723 B1**
(45) Date de publication et mention de la délivrance du brevet: **26.03.2003**
(21) Numéro de dépôt: 98201617.2
(22) Date de dépôt: 15.05.1998
(51) Int. Cl.: A23P 1/00, A23L 1/40, A23P 1/02

(54) **Aide culinaire de type bûchette**
Hölzenförmliches Küchenhilfsmittel
Culinary aid in form of a small log

(30) Priorité: 04.07.1997 EP 97202060
(43) Date de publication de la demande: 07.01.1999
(73) Titulaire: SOCIETE DES PRODUITS NESTLE S.A., 1800 Vevey (CH)
(72) Inventeur: Guillain, Valérie, 60000 Beauvais (FR); Mahe, Yannick, 60000 Beauvais (FR)
(74) Mandataire: Wavre, Claude-Alain

(56) Documents cités:
- EP-A- 0 490 082
- EP-A- 0 594 152
- EP-A- 0 780 058
- BE-A- 738 503
- US-A- 4 060 645
- US-A- 4 946 693

## Description

La présente invention a pour objet un aide culinaire de type bûchette, un procédé pour sa préparation et une installation pour la mise en oeuvre du procédé.

US-A-4060645 (Risler et al.) décrit un produit déshydraté sous forme de grains instantanément solubles dans l'eau qui présentent une texture poreuse continue et une surface lisse que l'on peut obtenir en extrudant dans une enceinte où règne une pression subatmosphérique une matière alimentaire comprenant des extraits de fruits, légumes ou graines, des amidons, gommes ou alginates, des extraits de viande, poisson ou levure, et/ou des hydrolysats de protéines, par exemple.

US-A-4946693 (Risler et al.) décrit un produit alimentaire constitué d'une masse déshydratée sous forme de poudre ou de paillettes de lait, graisses, amidon gélatinisé, extraits de viande et légumes ou hydrolysats de protéines, par exemple, et d'une garniture de morceaux de pâtes, viande ou légumes partiellement déshydratés, par exemple, cette garniture étant conditionnée séparément.

La présente invention a pour but de proposer un aide culinaire sous une forme attractive présentant en surface des morceaux visuellement identifiables de légumes, viande ou autre garniture et comprenant par ailleurs de la matière grasse et/ou un polysaccharide et des ingrédients sapides pulvérulents, par exemple.

A cet effet, l'aide culinaire de type bûchette selon la présente invention présente la forme d'une bûchette de surface granuleuse et comprend un coeur aromatique et un enrobage comportant une base liante et des éléments visuels.

De même, le procédé de préparation d'un aide culinaire de type bûchette selon la présente invention comprend les étapes successives de:
- mélange des composants du coeur,
- conditionnement à 5-25°C,
- formage,
- mélange des composants de la base liante,
- enrobage du coeur avec la base liante, et
- fixation des éléments visuels à la base liante.

L'aide culinaire de type bûchette selon la présente invention présente donc effectivement en surface des morceaux visuellement identifiables de légumes, viande ou autre garniture sous une forme granuleuse attractive.

Le procédé et l'installation selon la présente invention permettent de préparer cet aide culinaire de type bûchette d'une manière simple et en un nombre limité d'étapes.

Dans le présent exposé, l'expression "en forme de bûchette" est à comprendre comme présentant une forme de bûchette de petite taille, de section carrée et de quelques cm de longueur, par exemple.

L'expression "surface granuleuse" est à comprendre comme surface présentant des aspérités d'une taille comparable à celle des visuels.

L'expression "éléments visuels" est à comprendre comme éléments dont la taille est suffisamment grande et la couleur suffisamment contrastée par rapport à celle de l'ensemble pour être distingués à l'oeil nu.

Dans l'aide culinaire de type bûchette selon la présente invention, les éléments visuels peuvent être des morceaux déshydratés de tout produit alimentaire pouvant entrer en considération comme garniture.

Ces éléments visuels peuvent être en particulier des morceaux d'un ou plusieurs légumes, fruits, herbes aromatiques, viandes, poissons et/ou crustacés, des épices et/ou des graines entières ou concassées, par exemple.

Le coeur aromatique peut comprendre 30-50 parties de sel, 10-20 parties de glutamate, 10-20 parties de matière grasse, quelques parties de masse neutre et un complément de substances aromatiques, par exemple.

La base liante peut être constituée d'un mélange de différentes matières grasses associées ou non à d'autres composants destinés à en augmenter la viscosité tels que les amidons, maltodextrines, gommes ou alginates, par exemple.

A titre d'exemple, on peut citer une base liante comprenant 25% d'amidon de maïs, 20% d'huile de tournesol et 55% de graisse de palme hydrogénée présentant un point de fusion de 43-47°C.

Mais on peut utiliser également une base liante constituée d'une solution aqueuse d'amidons, maltodextrines, gommes ou alginates, par exemple.

De préférence, les composants de la base liante sont choisis de manière qu'elle présente un caractère fortement collant, afin de pouvoir y fixer les éléments visuels, caractère qui doit disparaître ensuite soit par refroidissement, au cas où la base liante est constituée d'un mélange de différentes matières grasses, soit par séchage, au cas où la base liante est constituée d'une solution d'amidons, maltodextrines, gommes ou alginates, par exemple.

C'est ainsi qu'un mélange de différentes matières grasses adéquat est de préférence liquide à une température de travail d'environ 50-60°C et solide à température ambiante, par exemple.

On peut également prévoir un surenrobage à l'aide de matières grasses, notamment pour exercer un effet positif sur les qualités de conservation de l'aide culinaire, par exemple.

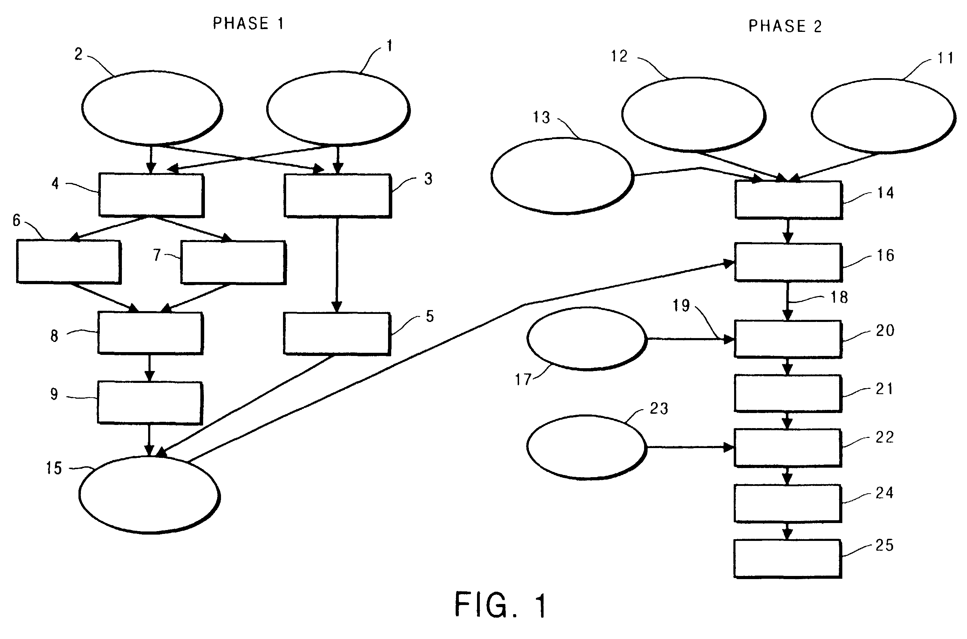

Pour mettre en oeuvre le procédé de préparation d'un aide culinaire de type bûchette selon la présente invention, on peut procéder en deux phases comme on l'a illustré à titre d'exemple à la Figure 1 du dessin annexé.

Dans une première phase de préparation du coeur aromatique (15), on peut soit mélanger des composants (poudre et cristallins (1), matière grasse (2)) tels que ceux utilisés pour la préparation de tablettes de bouillon dures, notamment dans un mélangeur (3) de type Lödige, conditionner/chambrer à 5-25°C et tablettiser, notamment sur presse (5) type Fette ou Bonals, soit mélanger des composants (matière grasse (2), poudre et cristallins (1)) tels que ceux utilisés pour la préparation de formes de bouillon molles, notamment dans un mélangeur à ruban (4) de type Kréber, stocker éventuellement à température ambiante, former par extrusion (7) ou laminage (6) et découpage (8), et refroidir (9), par exemple.

Dans une deuxième phase de préparation d'une base liante et enrobage, on peut préparer la base liante soit par dispersion d'amidons, maltodextrines, gommes ou alginates (11) dans l'eau (12), soit par liquéfaction de matières grasses (13) au moyen d'un mélangeur (14) à hélice, par exemple.

On peut ensuite enrober le coeur (15) par immersion complète (15) dans la base liante ou par aspersion combinée à un trempage partiel, la température d'une base constituée de matières grasses étant maintenue au-dessus de son point de fusion, par exemple.

On peut fixer (20) les éléments visuels (17) sur la bûchette enrobée de base liante et transférée sur un tapis à maille (18), en les dispersant dessus au moyen d'un couloir vibrant (19), par exemple.

Selon que la base liante est constituée de matières grasse ou d'amidons ou autres colloïdes, la bûchette peut être alors refroidie (21) par passage dans un tunnel à circulation d'air refroidi, notamment à environ 5°C, ou séchée dans un sécheur à air chaud, par exemple.

On peut surenrober la bûchette, notamment à l'aide d'une enrobeuse (22) à flux tombant, avec une matière grasse liquéfiée (23) contenant éventuellement des colorants, par exemple.

Après refroidissement (24), on peut alors conditionner la bûchette en emballage "flow pack" (25), par exemple.

## Revendications

1. Aide culinaire de type bûchette présentant la forme d'une bûchette de surface granuleuse et comprenant un coeur aromatique et un enrobage comportant une base liante et des éléments visuels.

2. Procédé de préparation d'un aide culinaire de type bûchette selon la revendication 1, comprenant les étapes successives de:
- mélange des composants du coeur,
- conditionnement à 5-25°C,
- formage,
- mélange des composants de la base liante,
- enrobage du coeur avec la base liante, et
- fixation des éléments visuels à la base liante.

## Claims

1. Stick-type culinary aid having the form of a stick with a granular surface and comprising an aromatic core and a coating having a binder base and visual elements.

2. Process for preparing a stick-type culinary aid according to claim 1, comprising the successive steps of:
- mixing the core components,
- conditioning at 5-25°C
- forming,
- mixing the components in the binder base,
- coating the core with the binder base, and
- attaching the visual elements to the binder base.

## Patentansprüche

1. Stabartige Kochhilfe in der Form eines Stabs mit körniger Oberfläche, der einen aromatischen Kern und eine Umhüllung aufweist, die eine bindende Basis und Sichtelemente umfaßt.

2. Verfahren zur Herstellung einer stabartigen Kochhilfe nach Anspruch 1, das die folgenden aufeinanderfolgenden Schritte umfaßt:
- Mischen der Bestandteile des Kerns,
- Konditionieren bei 5 - 25 °C,
- Formen,
- Mischen der Bestandteile der bindenden Basis,
- Umhüllen des Kerns mit der bindenden Bais und
- Befestigung der Sichtelemente an der bindenden Basis.
